Europäisches Patentamt

European Patent Office

Office européen des brevets

(19)

(11) Veröffentlichungsnummer: **0 096 158**
**B1**

(12) **EUROPÄISCHE PATENTSCHRIFT**

(45) Veröffentlichungstag der Patentschrift:
04.09.85

(51) Int. Cl.⁴: **H 01 R 39/40, H 02 K 5/14**

(21) Anmeldenummer: 83102120.9

(22) Anmeldetag: 04.03.83

(54) **Bürstenhalterung an mit Entstördrossel ausgestatteten Elektromotoren, insbesondere für Haushaltsgeräte wie Staubsauger oder dergleichen.**

(30) Priorität: 03.06.82 DE 3220877

(43) Veröffentlichungstag der Anmeldung:
21.12.83 Patentblatt 83/51

(45) Bekanntmachung des Hinweises auf die Patenterteilung:
04.09.85 Patentblatt 85/36

(84) Benannte Vertragsstaaten:
AT BE CH DE FR GB IT LI LU NL SE

(56) Entgegenhaltungen:
EP - A - 0 044 113
GB - A - 2 027 282
US - A - 3 474 274
US - A - 3 842 302
US - A - 4 266 155

(73) Patentinhaber: Vorwerk & Co. Interholding GmbH,
Mühlenweg 17-35, D-5600 Wuppertal 2 (DE)

(72) Erfinder: Becker, Dietmar, Ritter-von-Halt-Strasse 44,
D-5608 Radevormwald (DE)
Erfinder: Wilcke, Klaus-Dieter, Schulstrasse 25,
D-5820 Gevelsberg (DE)

(74) Vertreter: Rieder, Hans-Joachim, Dr.,
Corneliusstrasse 45 Postfach 11 04 51,
D-5600 Wuppertal 11 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Bürstenhalterung gemäss Oberbegriff des Anspruchs 1.

Aus der DE-A Nr. 1588975 ist eine Bürstenhalterung bekannt, bei welcher das Tragteil einen sich über die Länge der Führungshülse erstreckenden Steg besitzt. Im Mittelbereich gehen von diesem relativ kurz bemessene Seitenwände aus. Die im Querschnitt U-förmige Führungshülse wird so dem Tragteil zugeordnet, dass die offene Seite auf den Steg aufsetzt unter Verwirklichung eines Formschlusses. Zur Fixierung der eingelegten Führungshülse dient eine auf diese drückende Blattfeder, deren Enden an den Seitenwänden vorgesehene Nischen hintergreifen. Die Seitenwände setzen sich in hakenartige Abschnitte fort, welche zum Durchtritt von das Tragteil am Motorchassis fixierenden Schrauben dienen. Einerseits ist das Befestigen des Tragteils am Motorchassis umständlich. Bei nich genauer Ausrichtung kann es geschehen, dass die von der Führungshülse aufgenommene Kohlebürste nicht in die vorschriftsmässige Lage zum Kollektor gelangt. Ferner ist die Führungshülse mit ihrer Kohlebürste nicht schwingungssicher im Tragteil gehalten. Dies kann zu einer ungleichmässigen Leistungsaufnahme des Motors und zu Bürstenfeuer führen, da die Kohlebürste ihre Anlage an dem Umfang des Kollektors ändert.

Dem Gegenstand der Erfindung liegt die Aufgabe zugrunde, eine Bürstenhalterung der vorgenannten Art in herstellungstechnisch einfacher Weise gebrauchsvorteilhaft auszugestalten derart, dass das Tragteil die Führungshülse schwingungsfrei hält, bei seinem Einbau am Motorchassis stets die genaue Ausrichtung erzwingt und weitere Halterungsfunktionen übernimmt.

Gelöst wird diese Aufgabe durch das Kennzeichen des Anspruchs 1.

Zufolge derartiger Ausgestaltung ist eine gattungsgemässe Bürstenhalterung von erhöhtem Gebrauchswert angegeben. Es liegt eine absolut spiel- und wackelfreie Befestigung der Führungshülse in dem Tragteil vor unter Vermeidung einer ungleichmässigen Leistungsaufnahme des Motors und eines Bürstenfeuers. Der auf die freien Randkanten der Seitenwände aufgesetzte Deckel sichert nämlich die Führungshülse in ihrer eingesteckten Lage. Der Einbau der die Kohlebürste aufnehmenden Führungshülse geschieht dabei vor dem Anbringen des Deckels. Danach wird dieser unverrückbar in geeigneter Weise festgelegt, so dass die Führungshülse in einem ringsum geschlossenen Kanal einliegt. Die die Auflageflächen bildenden Flügel des Steges erzwingen stets eine genaue Ausrichtung des Tragteils bei der Montage am Motorchassis. Daher gelangt die Kohlebürste in die vorschriftsmässige Ausrichtung zum Kollektor. Das Tragteil der Bürstenhalterung ist dann nur noch federzuverspannen. Der Vorgang des Einbaues und eines eventuellen Austausches der Bürstenhalterung lässt sich daher leicht bewerkstelligen. Ferner bietet das Tragteil die Möglichkeit, die Entstördrossel und Steckverteilerplatte ohne zusätzliche Bauteile zu halten, was zu einer kompakten Bauform führt und eine mechanische Trennung zwischen der Kohlebürste und der elektrischen Anschlusskontaktierung gestattet.

Eine vorteilhafte Weiterbildung ist darin zu sehen, dass die Öffnung zur Halterung der Entstördrossel als nach rückwärts offenes Klemmaul ausgebildet ist. Die gegenüber dem Klemmaul querschnitsgrössere Entstördrossel braucht daher lediglich zu ihrer Befestigung in das Klemmaul eingeschoben zu werden, wobei sie in der Enteinschubstellung verrastet und danach weitgehend schwingungsfrei gehalten ist. Um auch der Steckverteilerplatte eine weitgehend schwingungsfreie Anordnung zu verleihen, ist die Öffnung zur Halterung der Steckverteilerplatte im Flügel unmittelbar neben der einen Seitenwand vorgesehen, welche einen den Deckel überragenden Lappen ausbildet, der sich in einen Haltevorsprung fortsetzt, welcher eine Öffnung im Knickbereich einer von der Steckverteilerplatte in Richtung der Entstördrossel abgewinkelten Anschlussfahne durchsetzt.

Eine Stabilitätserhöhung erhält die eingesetzte Steckverteilerplatte dadurch, dass eine von der Steckverteilerplatte abgewinkelte Kante in einen Schacht des Tragteils eintaucht. Durch entsprechende Abwinklung kann ein Klemmsitz erzeugt werden. Der Schacht befindet sich dabei in dem von der einen Seitenwand ausgehenden Lappen.

Um das die Öffnung des Steges durchsetzende Einsteckende der Steckverteilerplatte vor Beschädigungen zu stützen, stehen beiderseits der Öffnung zur Halterung der Steckverteilerplatte Lappen des Tragteils über die Oberseite des Steges vor. Ferner verhindern diese Lappen das Herausdrücken der Steckverteilerplatte von oben her.

Eine Einbauhilfe der Bürstenhalterung ist darin zu sehen, dass die Oberseite des Steges einen Zentriervorsprung trägt, der in eine Öffnung einer gebogenen, sich an der Oberseite des Steges abstützenden Blattfeder eingreift, deren Enden unter Biegespannung Halteschultern am Motorchassis untergreifen. Die Blattfeder kann daher nicht falsch montiert werden. Stets gelangt sie in die vorschriftsmässige Lage unter Erzielung einer vorschriftsmässigen Verspannung der Bürstenhalterung am Motorchassis.

Eine etwaige Wärmeabgabe der die Kohlebürste aufnehmenden Führungshülse ist dadurch begünstigt, dass der Dekel mit Durchbrechungen versehen ist.

Zur Sicherung der Bürstenhalterung quer zur Auflageebene der Flügel dienen die in diesen vorgesehenen randseitigen Aussparungen, in welche Rippen des Motorchassis formschlüssig eingreifen.

Darüber hinaus ist es vorteilhaft, dass das in den Schacht eintauchende Ende der Steckverteilerplatte quer zur Steckverteilerplatte quer zur Steckereinführungsrichtung abgebogen verläuft und eine Auflaufschräge bildet für das Ende eines Anschlusssteckers. Hierduch wird das Ende des Anschlusssteckers entsprechend dem Verlauf der Abbiegung umgelenkt unter Erzielung einer Nachspannreserve, welche einen dauerhaften Kontakt zwischen Steckverteiler und Anschlussstecker gewährleistet.

Eine stabile Bauform und axiale Lagenfesselung erhält die Führungshülse dadurch, dass die sie als ringsgeschlossener Schacht ausgebildet ist, dessen Seitenwände mit auswärts gerichteten Fortsätzen bestückt sind, die in Rillen der Innenflächen der Seitenwände ragen.

Hierbei ist es vorteilhaft, dass die Randkanten der zu dem Schacht gebogenen Wände der Führungshülse schwalbenschwanzförmig ineinandergreifen.

Um da Montieren der das Tragteil belastenden Blattfeder am Motorchassis zu erleichtern, ist die Blattfeder an diagonalgegenüberliegenden Ecken mit Auflaufschrägen versehen. Demgemäss kann die Blattfeder unter Ausführung einer Drehbewegung in ihre verspannende Lage geschwenkt werden, in welcher sie anschliessend verrastet.

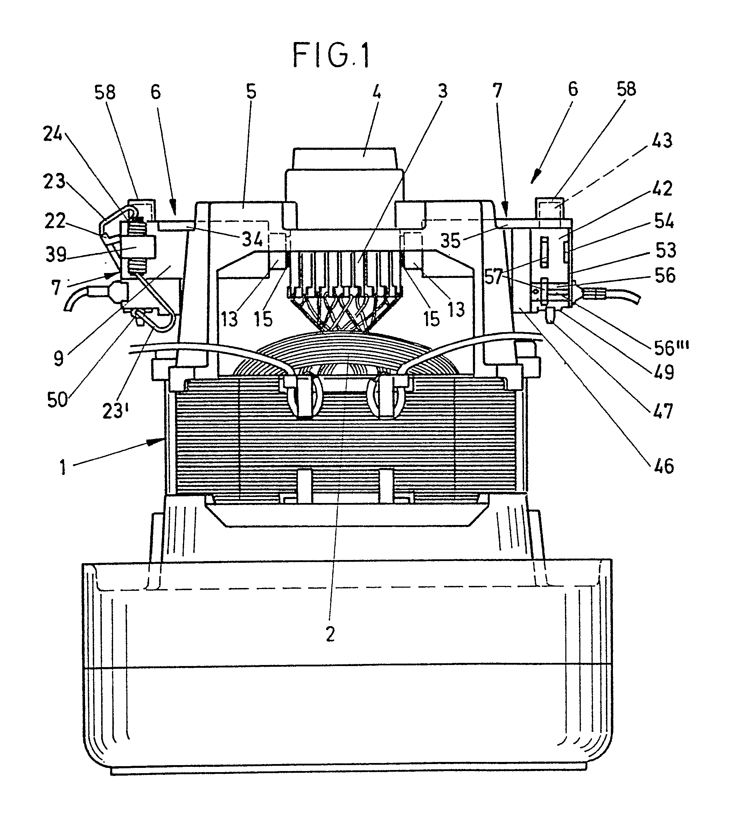

Nachstehend wird ein Ausführungsbeispiel der Erfindung anhand der Fig. 1 bis 10 erläutert. Es zeigt

Fig. 1 eine Ansicht eines mit den Bürstenhalterungen ausgestatteten Elektromotors,

Fig. 2 eine teilweise Draufsicht auf den Elektromotor,

Fig. 3 den Schnitt nach der Linie III-III in Fig. 2,

Fig. 4 in perspektivischer Darstellung eine Bürstenhalterung,

Fig. 5 in vergrösserter Darstellung eine Draufsicht auf das die Führungshülse für die Kohlebürste aufnehmende Tragteil, und zwar bei strichpunktiert angedeutetem Deckel,

Fig. 6 den Schnitt nach der Linie VI-VI in Fig. 5,

Fig. 7 den Schnitt nach der Linie VII-VII in Fig. 5,

Fig. 8 den Schnitt nach der Linie VIII-VIII in Fig. 5

Fig. 9 in stark vergrösserter Darstellung einen Querschnitt durch die Steckverteilerplatte im Bereich eines dieser zugeordneten Anschlußsteckers und

Fig. 10 eine klappfigürliche Ansicht der Fig. 9.

Der Elektromotor besitzt ein Motorchassis 1. Dieses enthält eine Statorwicklung 2, welche einen nicht dargestellten Rotor umgibt. An letzterem sitzt ein Kollektor 3. Das über diesen vorstehende eine Ende der nicht dargestellten Rotorwelle läuft in einem Lager 4 einer diametral verlaufenden Brücke 5 des Motorchassis 1.

Beiderseits des Kollektors 3 nimmt die Brücke 5 untereinander gleich ausgebildete Bürstenhalterungen 6 auf.

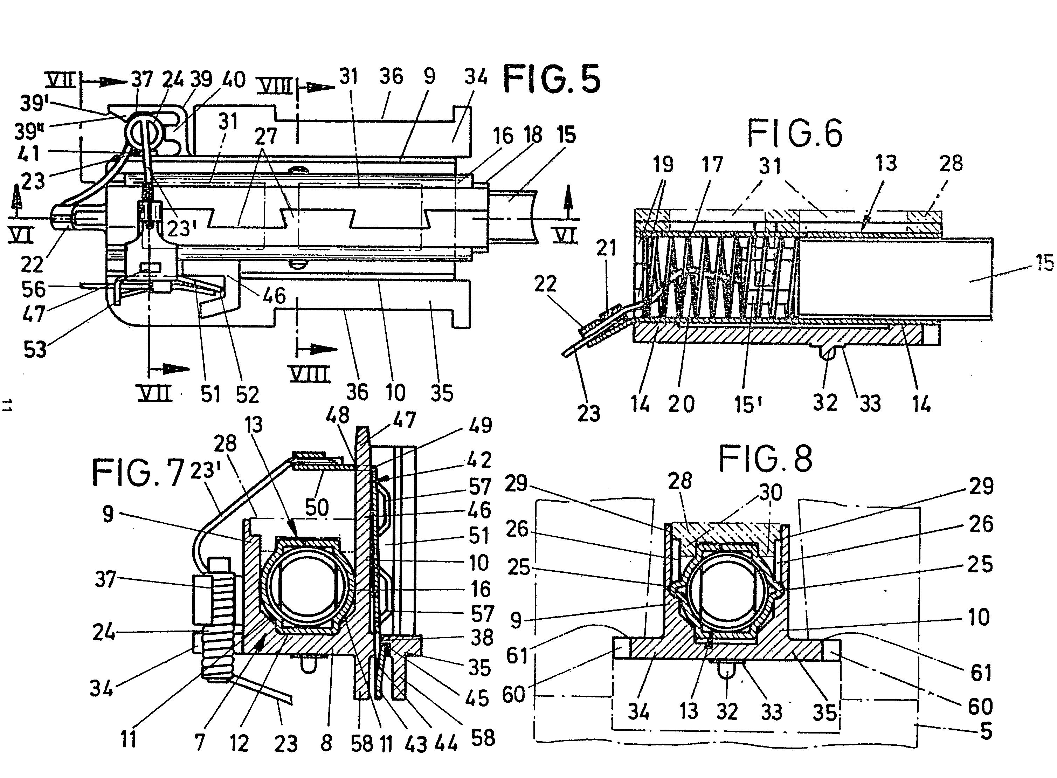

Jede Bürstenhalterung 6 enthält ein aus isolierendem Material bestehendes, im Querschnitt U-förmiges Tragteil 7. Von dem Steg 8 des Tragteils 7 gehen sich über die ganze Länge des Steges erstreckende Seitenwände 9 und 10 aus. Die Innenflächen der Seitenwände formen am dem Steg 8 benachbarten Ende einem Einlagerungsabschnitt 12 vorgeordnete Einlaufschrägen 11, welcher Einlagerungsabschnitt 12 teilweise eine aus leitendem Material bestehende Führungshülse 13 umgreift. Innenseitig ist der Steg 8 mit endständigen Erhöhungen 14 versehen, auf welchen die Führungshülse 13 aufliegt, vergl. insbesondere Fig. 6.

Die Führungshülse 13 besitzt ein im wesentlichen rechteckiges Querschnittsprofil zur Aufnahme der entsprechend querschnittsprofilierten Kohlebürste 15. Im mittleren Bereich bildet das Rechteckprofil der Führungshülse 13 durch sich gegenüberliegende Ausbauchungen 16 einen Kreisquerschnitt zur Führung einer die Kohlebürste 15 belastenden Druckfeder 17.

Um zu verhindern, dass nach Abnutzung der Kohlebürste 15 die Druckfeder an dem Kollektor 3 schleift, setzen die Ausbauchungen 16 jenseits eines querschnittskleineren Abschnitts 18 am vorderen Ende der Führungshülse I3 an. Die Druckfeder 17 überfängt einen Absatz 15' der Kohlebürste 15 und stützt sich mit einem Ende an der zwischen Kohlebürste 15 und Absatz 15' gebildeten Schulter ab. Das andere Ende der Druckfeder 17 findet Abstützung an einwärts gewinkelten Lappen 19 am rückwärtigen Ende der Führungshülse 13. Von der Kohlebürste 15 geht ein nach rückwärts gerichtetes Kupferseil aus, welches mittels einer Klemme 21 mit dem einen Anschlussende 23 einer Entstördrossel 24 verbunden ist. Das hintere Ende der Führungshülse 13 setzt sich in eine Anschlussfahne 22 fort, die zusätzlich das Anschlussende 23 der Entstördrossel 24 mit dem Ende des Zugseils 20 verbindet und diese Enden fixiert, vergl. Fig. 6.

Die mit den Ausbauchungen 16 versehenen Seitenwände der als ringsgeschlossener Schacht ausgebildeten Führungshülse 13 sind mit auswärts gerichteten Fortsätzen 25 bestückt. Diese sind durch Herausdrücken erzeugt und ragen in vertikal zum Steg 8 des Tragteils 7 ausgerichtete Rillen 26 der Innenflächen der Seitenwände 9, 10. Dadurch erhält die sich über die Länge des Tragteils 7 erstreckende Führungshülse 13 eine Lagenfixierung in Achsrichtung.

Die Führungshülse 13 ist aus einem Stück geboten, wobei die Randkanten 27, wie aus Fig. 5 ersichtlich, schwalbenschwanzförmig ineinandergreifen.

Die von oben zwischen die Seitenwände 9, 10 spielfrei eingesteckte Führungshülse 13 wird in ihrer Lage durch einen Deckel 28 gesichert. Dieser stützt sich mit seiner Unterseite an Längsaussparungen 29 der freien Randkanten der Seitenwände 9, 10 ab. Der Deckel 28 weist zwei formpassend zwischen die Seitenwände 9, 10 ragende Stege 30 auf, die den dem Steg 8 gegenüberliegenden rechteckige Abschnitt der Führungshülse 13 spielfrei übergreifen, vergl. Fig. 8. Der Deckel 28 kann mit den Seitenwänden 9, 10 verklebt, verschweisst oder in geeigneter Weise verbunden sein. Auf diese Weise ist die Führungshülse 13 in dem Tragteil 7 schwingungsfrei fixiert. Der Deckel 28 enthält zwei in Fig. 5 strichpunktiert dargestellte Durchbrechungen 31.

Die Oberseite des Steges 7 trägt im mittleren Bereich einen Zentriervorsprung 32, wobei an der Übergangsstelle zwischen Oberseite und Zentriervorsprung 32 ein Kragen 33 angeformt ist.

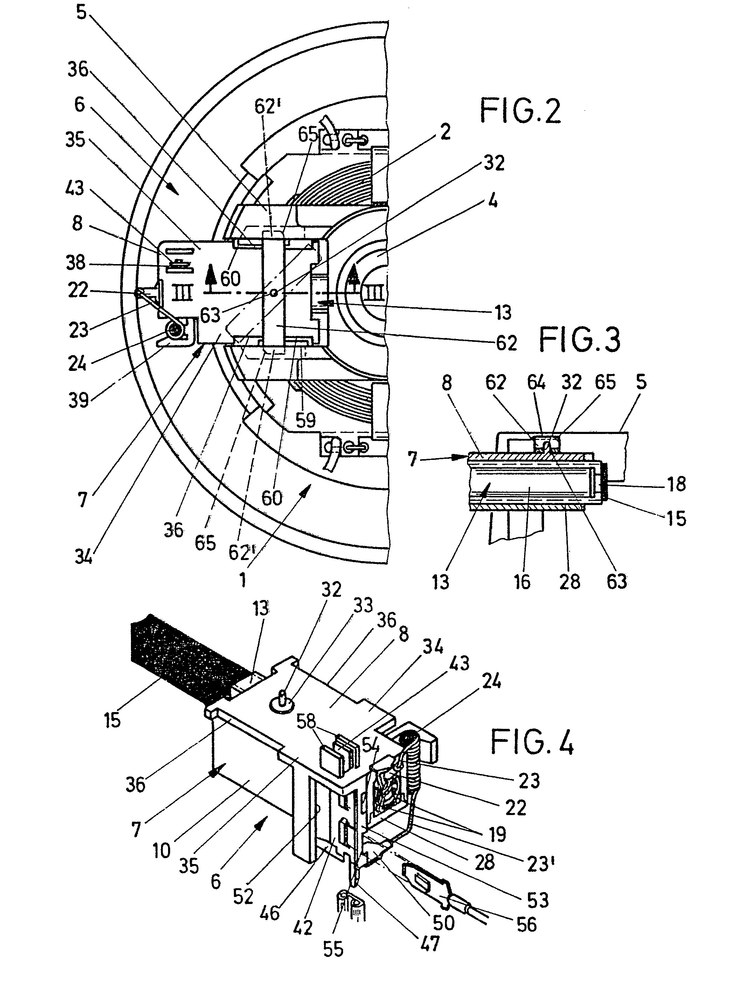

Der Steg 8 des Tragteils 7 ist mit nach auswärts über die Seitenwände 9, 10 vorstehenden Flügeln 34, 35 ausgestattet derart, dass der Flügel 34 mit Abstand vor dem rückwärtigen Ende des Tragteils 7 endet, vergl. insbesondere Fig. 4 und 5. Randseitig sind in den Flügeln 34, 35, dem vorderen Ende des Tragteils 7 benachbart, Aussparungen 36 angeordnet.

Das Tragteil 7 enthält im rückwärtign Bereich beiderseits der Seitenwände 9, 10 Öffnungen 37 bzw. 38. Die Öffnung 37 wird von einem von der Seitenwand 9 materialeinheitlich ausgehenden, ein Klemmaul bildenden, winkelförmigen Rastarm 39 geformt. Ein endseitiger, mit einer Auflaufschräge 39' versehener Nocken 39'' stellt in Verbindung mit weiteren Stegen 40, 41 eine Dreipunktauflage für die Entstördrossel 24 dar.

Die andere Öffnung 38 ist einer Steckverteilerplatte 42 zugeordnet. Diese tritt mit einem Stecker 43 in die Öffnung 38 ein. Eine freigeschnittene, ausgebogene Rastnase 44 hintergreift in der eingeschobenen Stellung eine Schulter 45 der Öffnung 38, vergl. Fig. 7. Die Öffnung 38 befindet sich neben der einen Seitenwand 10, die somit zur Anlage der Steckverteilerplatte 42 dient. Die Seitennwand 10 ist mit einem den Deckel 28 überragenden Lappen 46 ausgebildet, der sich seinerseits in einen Haltevorsprung 47 fortsetzt, welcher eine Öffnung 48 im Knickbereich 49 einer von der Steckverteilerplatte 42 in Richtung der Entstördrossel 24 abgewinkelten Anschlussfahne 50 durchgreift. Diese ist mit dem anderen Anschlussende 23' der Entstördrossel 24 durch Umklammerung verbunden.

Von der Steckverteilerplatte 42 geht eine quer zur Steckereinführungsrichtung abgebogene Kante 51 aus, die klemmend in einen Schacht 52 des Tragteils 7 eintaucht. Dieser Schacht 52 ist Bestandteil des den Deckel 28 übergreifenden Lappens 46.

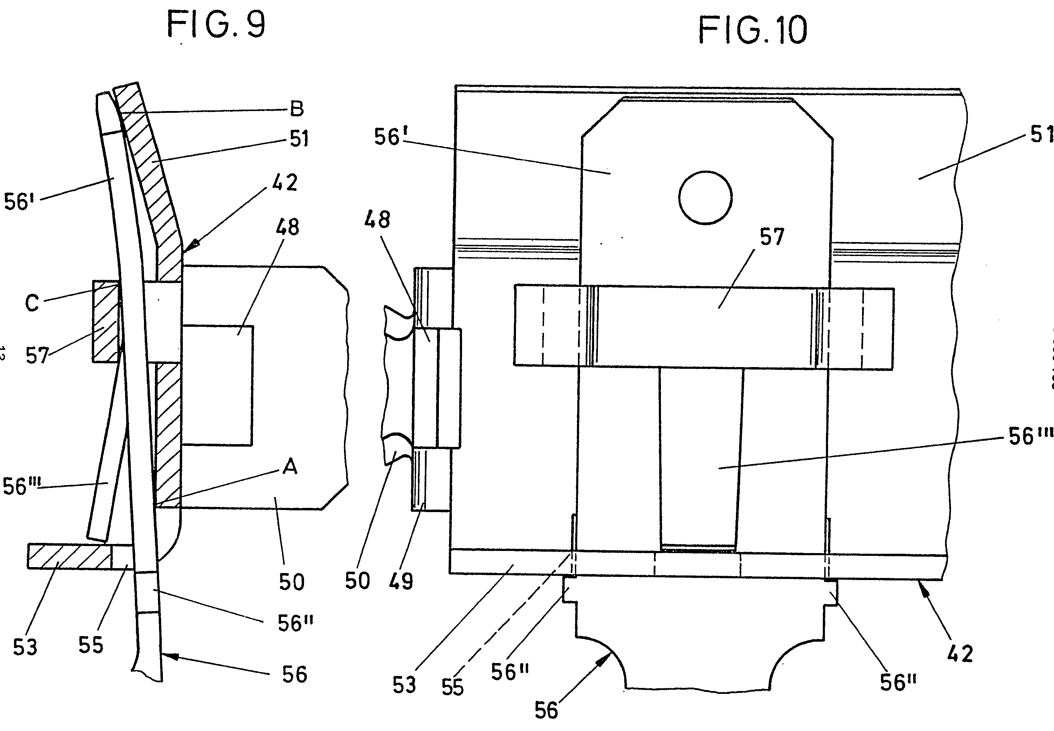

Das der Kante 51 gegenüberliegende Ende der Steckverteilerplatte 42 ist zu einer Abwinklung 53 abgebogen. In dieser befinden sich Einführöffnungen 54 und 55 für Flachstecker 56. Auf Höhe der Einführöffnungen sind durch Freischneiden und Herausdrücken Bügel 57 erzielt. Ein der Steckverteilerplatte 42 zugeordneter Flachstecker 56 erhält demgemäss eine Dreipunktabstützung, wobei die zwei äusseren Punkte A und B als Auflagepunkte und der Punkt C am Bügel 57 als Kraft angesehen werden können. Die Kraft wird dadurch erzeugt, dass die Federeigenschaft des handelsüblichen Steckers 56 ausgenutzt wird, und zwar durch entsprechende Lage des Auflagepunktes B, zum Punkt C. Wird ein Flachstecker 56 durch die Einführöffnung 54 bzw. 55 eingesteckt, durchsetzt er den entsprechenden Bügel 57. Danach trifft die Spitze 56' des Flachsteckers auf die eine Auflauffläche bildende Kante 51, wo der Auflagepunkt B nur noch um Materialstärke des Flachsteckers unter dem Gegenkraftpunkt C liegt. Bei der weiteren Einschubbewegung beginnt die Verformung des Flachsteckers 56 einhergehend mit einem Verbiegen unter Herstellung einer Nachspannreserve. Diese Kraft ist je nach Auslegung des Winkels der Kante 51 unterschiedlich. Der Einschub des Flachsteckers 56 wird durch beidseitige Anschläge 56'' begrenzt, die gegen den seitlich der Einführöffnung 54 bzw. 55 vorhandenen Materialbereich der Steckverteilerplatte 42 stossen. Gleichzeitig ist eine Rastnase 56''' des Flachsteckers vor die Innenfläche der Abwinklung 53 getreten und stellt eine Abzugssicherung dar, siehe insbesondere Fig. 9.

Um eine Deformierung des Steckers 43 der Steckverteilerplatte 42 auszuschliessen, stehen beiderseits der Öffnung 38 vom Steg 8 ausgehende Lappen 58 vor, die sich über die Länge des Steckers 43 erstrecken.

Das Einsetzen der fertig montierten Bürstenhalterung 6 geschieht derart, dass das Tragteil 7 von oben her in eine Ausnehmung 59 der Brücke 5 eingeführt wird. Zwei sich gegenüberliegende Rippen 60 der Brücke 5 des Motorchassis 1 tauchen formschlüssig in die Aussparungen 36 der Flügel 34, 35 ein. Die Einsteckbewegung wird begrenzt durch Schultern 61 der Brücke 5, gegen welche die Auflageflächen bildenden Flügel 34, 35 stossen. Es kann nun eine gebogene, sich an der Oberseite des Steges 8 abstützende Blattfeder 62 angebracht werden. Dieselbe ist mit einer mittigen Öffnung 63 versehen, in die der Zentriervorsprung 32 eingreift. Unter gleichzeitigem Drücken und Verdrehen der Blattfeder 62 können deren Enden 62' Halteschultern 64 der Brücke 5 untergreifen. Die Blattfeder 62 liegt dabei mit ihrer Krümmung auf der Oberseite bzw. dem Kragen 33 des Steges 8 auf. Zum erleichterten Einführen der Blattfeder 62 bildet diese an diagonal gegenüberliegenden Ecken durch Abwinklung erzielte Auflaufschrägen 65 aus.

## Patentansprüche

1. Bürstenhalterung an mit Entstördrossel (24) ausgestatteten Elektromotoren, insbesondere für Haushaltsgeräte wie Staubsauger oder dergleichen, mit einem am Motorchassis befestigten Tragteil (7) aus nichtleitendem Material, in welches eine aus leitendem Material bestehende Führungshülse (13) für die Kohlebürste (15) plus ihrer Belastungsfeder (17) durch Forschluss axial unverschieblich zwischen zwei von einem Steg (8) ausgehenden Seitenwänden (9, 10) eingesetzt ist, wobei das rückwärtige Ende der Führungshülse (13) eine Anschlussfahne (22) für den Leiter (20) der Kohlebürste (15) besitzt, dadurch gekennzeichnet, dass die freien Randkanten der Seitenwände (9, 10) einen die Führungshülse (13) abstützenden Deckel (28) tragen und der Steg (8) des Tragteils (7) nach auswärts über die Seitenwände (9, 10) vorstehende, als Auflageflächen zur federverspannenden Halterung am Motorchassis (1) dienende Flügel (34, 35) bildet und im rückwärtigen Bereich des Tragteils (7) beiderseits der Seitenwände (9, 10) Öffnungen (37 bzw. 38) vorgesehen sind zur verrastenden Halterung der Entstördrossel (24) und einer Steckverteilerplatte (42).

2. Bürstenhalterung nach Anspruch 1, dadurch gekennzeichnet, dass die Öffnung (37) zur Halte-

rung der Entstördrossel (24) als nach rückwärts offenes Klemmaul ausgebildet ist.

3. Bürstenhalterung nach Anspruch 1, dadurch gekennzeichnet, dass die Öffnung (38) zur Halterung der Steckverteilerplatte (42) im Flügel (35) unmittelbar neben der einen Seitenwand (10) vorgesehen ist, welche einen den Deckel (28) überragenden Lappen (46) ausbildet, der sich in einen Haltevorsprung (47) fortsetzt, welcher eine Öffnung (48) im Knickbereich (49) einer von der Steckverteilerplatte (42) in Richtung der Entstördrossel (24) abgewinkelten Anschlussfahne (50) durchsetzt.

4. Bürstenhalterung nach Anspruch 1, dadurch gekennzeichnet, dass eine von der Steckverteilerplatte (42) abgewinkelte Kante (51) in einen Schacht (52) des Tragteils (7) eintaucht.

5. Bürstenhalterung nach Anspruch 3, dadurch gekennzeichnet, dass beiderseits der Öffnung (38) zur Halterung der Steckverteilerplatte (42) Lappen (58) des Tragteils (7) über die Oberseite des Steges (8) vorstehen.

6. Bürstenhalterung nach Anspruch 1, dadurch gekennzeichnet, dass die Oberseite des Steges (8) einen Zentriervorsprung (32) trägt, der in eine Öffnung (63) einer gebogenen, sich an der Oberseite des Steges (8) abstützenden Blattfeder (62) eingreift, deren Enden (62') unter Biegespannung Halteschultern (64) am Motorchassis (1) untergreifen.

7. Bürstenhalterung nach Anspruch 1, dadurch gekennzeichnet, dass der Deckel (28) mit Durchbrechungen (31) versehen ist.

8. Bürstenhalterung nach Anspruch 1, dadurch gekennzeichnet, dass die Flügel (34, 35) randseitige Aussparungen (36) besitzen, in welche Rippen (60) des Motorchassis (1) formschlüssig eingreifen.

9. Bürstenhalterung nach den Ansprüchen 3 und 4, dadurch gekennzeichnet, dass die in den Schacht (52) eintauchende Kante (51) der Steckverteilerplatte (42) quer zur Steckereinführungsrichtung abgebogen verläuft und eine Auflaufschräge bildet für das Ende (56') eines Anschlusssteckers (56).

10. Bürstenhalterung nach Anspruch 1, dadurch gekennzeichnet, dass die Führungshülse (13) als ringsgeschlossener Schacht ausgebildet ist, dessen Seitenwände mit auswärts gerichteten Fortsätzen (25) bestückt sind, die in Rillen (26) der Innenflächen der Seitenwände (9, 10) ragen.

11. Bürstenhalterung nach Anspruch 10, dadurch gekennzeichnet, dass die Randkanten (27) der zu einem Schacht gebogenen Wände der Führungshülse (13) schwalbenschwanzförmig ineinandergreifen.

12. Bürstenhalterung nach Anspruch 6, dadurch gekennzeichnet, dass die Blattfeder (62) an diagonal gegenüberliegenden Ecken Auflaufschrägen (65) ausbildet.

### Claims

1. A brush-holder on electric motors equipped with interference suppressor chokes (24), in particular for household apparatus such as vacuum cleaners or the like, having, fastened to the motor frame, a supporting portion (7) of non-conductive material, into which a guide sleeve (13) consisting of conductive material, for the carbon brush (15) plus its loading spring (17), is inserted to be unable to shift axially through a positive fit between two sidewalls (9, 10) extending from a web (8), the rear end of the guide sleeve (13) having a connecting lug (22) for the lead (20) to the carbon brush (15), characterized in that the free lateral edges of the sidewalls (9, 10) carry a lid (28) supporting the guide sleeve (13), and the web (8) of the supporting portion (7), projecting outwards beyond the sidewalls (9, 10), forms lobes (34, 35) to serve as bearing areas for the spring-loaded mounting on the motor frame (1), and in the rear region of the supporting portion (7) on both sides of the sidewalls (9, 10) openings (37 resp. 38) are provided for mounting the interference suppressor choke (24) and a plug-in distributor plate (42) by snapping them in.

2. A brush-holder as in Claim 1, characterized in that the opening (37) for the mounting of the interference suppressor choke (24) is made as a jaw clip open towards the rear.

3. A brush-holder as in Claim 1, characterized in that the opening (38) for the mounting of the plug-in distributor plate (42) is provided in the lobe (35) directly beside the one sidewall (10) which forms a tongue (46) which projects beyond the lid (28) and which continues into a retaining projection (47) which passes through an opening (48) in the region (49) of the knee in a connecting lug (50) bent down from the plug-in distributor plate (42) in the direction of the interference suppressor choke (24).

4. A brush-holder as in Claim 1, characterized in that one edge (51) bent down from the plug-in distributor plate (42) dips into a hollow (52) in the supporting portion (7).

5. A brush-holder as in Claim 3, characterized in that on both sides of the opening (38) for mounting the plug-in distributor plate (42) tongues (58) on the supporting part (7) project above the upper face of the web (8).

6. A brush-holder as in Claim 1, characterized in that the upper face of the web (8) carries a centering projection (32) which engages in an opening (63) in a curved leaf spring (62) which bears against the upper face of the web (8) and the ends (62') of which engage with bending resilience under retaining shoulders (64) on the motor frame (1).

7. A brush-holder as in Claim 1, characterized in that the lid (28) is provided with perforations (31).

8. A brush-holder as in Claim 1, characterized in that the lobes (34, 35) have next the edges recesses (36) in which ribs (60) on the motor frame (1) engage positively.

9. A brush-holder as in Claims 3 and 4, characterized in that the edge (51) of the plug-in distributor plate (42), which dips into the hollow (52) runs bent down in a direction transverse to the direction of plugging in and forms a bevel for the end (56') of a connector plug (56) to run up.

10. A brush-holder as in Claim 1, characterized in that the guide sleeve (13) is made as a hollow closed all round, the sidewalls of which are tipped with outwards directed extensions (25) which project into grooves (26) in the inner faces of the sidewalls (9, 10).

11. A brush-holder as in Claim 10, characterized in that the lateral edges (27) of the walls of the guide sleeve (13) curved into a hollow engage in one another in the form of dovetails.

12. A brush-holder as in Claim 6, characterized in that the leaf spring (62) forms leading bevels (65) at corners lying diagonally opposite.

## Revendications

1. Porte-balai pour moteur électrique équipé d'une self d'antiparasitage (24), notamment pour des appareils ménagers tels que des aspirateurs ou analogues, comportant une partie porteuse (7) formée d'un matériau non conducteur et fixée sur le châssis du moteur, dans lequel un fourreau (13), constitué d'un matériau conducteur et servant au guidage du balai de charbon (15) et de son ressort de sollicitation (17) est disposé sans possibilité de translation axiale entre deux parois latérales (9, 10) faisant saillie d'une âme (8), l'extrémité arrière du fourreau de guidage (13) comportant une languette de connexion (22) pour le conducteur (20) du balai de charbon (15), caractérisé en ce que les bords libres des parois latérales (9,10) portent un couvercle (28) soutenant le fourreau de guidage (13) et l'âme (8) de la partie porteuse (7) forme des ailes (34, 35) faisant saillie vers l'extérieur au-dessus des parois latérales (9, 10) et servant de surface d'appui pour le montage avec précontrainte élastique sur le châssis de moteur (1), et il est prévu dans la zone arrière de la partie porteuse (7), des deux côtés des parois latérales (9,10), des ouvertures (37 ou 38) en vue de maintenir dans une condition verrouillée la self d'antiparasitage (24) et une plaque de distribution à enfichage (42).

2. Porte-balai selon la revendication 1, caractérisé en ce que l'ouverture (37) destinée à maintenir la self d'antiparasitage (24) forme une embouchure de blocage ouverte vers l'arrière.

3. Porte-balai selon la revendication 1, caractérisé en ce que l'ouverture (38) servant à maintenir la plaque de distribution à enfichage (42) est ménagée dans une aile (35), immédiatement à côté d'une des parois latérales (10), qui forme une lèvre (46) dépassant du couvercle (28) et prolongée par une saillie de retenue (47) qui traverse une ouverture (48) ménagée dans une zone coudée (49) d'une languette de connexion (50) pliée à partir de la plaque de distribution à enfichage (42) en direction de la self d'antiparasitage (24).

4. Porte-balai selon la revendication 1, caractérisé en ce qu'un bord (41) plié à partir de la plaque de distribution à enfichage (42) pénètre dans un alvéole (52) de la partie porteuse (7).

5. Porte-balai selon la revendication 3, caractérisé en ce qu'il est prévu, de part et d'autre de l'ouverture (38) servant à maintenir la plaque de distribution à enfichage (42), des lèvres (58) de la partie porteuse (7) faisant saillie sur le côté supérieur de l'âme (8).

6. Porte-balai selon la revendication 1, caractérisé en ce que le côté supérieur de l'âme (8) porte une saillie de centrage (32) qui s'accroche dans une ouverture (63) d'une lame élastique (62) courbe, s'appuyant contre le côté supérieur de l'âme (8) et dont des extrémités (62') s'accrochent, sous l'effet d'une contrainte de flexion, sur des épaulements de retenue (64) du châssis de moteur (1).

7. Porte-balai selon la revendication 1, caractérisé en ce que le couvercle (28) est pourvu d'évidements (31).

8. Porte-balai selon la revendication 1, caractérisé en ce que les ailes (34, 35) comportent des évidements marginaux (36) dans lesquels s'accrochent, avec conjugaison de formes, des nervures (60) du châssis de moteur (1).

9. Porte-balai selon les revendications 3 et 4, caractérisé en ce que le bord (51) pénétrant dans l'alvéole (52), de la plaque de distribution à enfichage (42) est plié perpendiculairement à la direction d'introduction de fiches et forme un chanfrein d'engagement pour l'extrémité (56') d'une fiche de connexion (56).

10. Porte-balai selon la revendication 1, caractérisé en ce que le fourreau de guidage (13) est agencé comme un alvéole en forme d'anneau fermé, dont les parois latérales sont pourvues d'appendices (25) dirigés vers l'extérieur et pénétrant dans des rainures (26) des surfaces intérieures des parois latérales (9, 10).

11. Porte-balai selon la revendication 10, caractérisé en ce que les bords (27) des parois du fourreau de guidage (13), cintrées pour former un alvéole, s'accrochent l'un dans l'autre à la manière d'un joint en queue d'aronde.

12. Porte-balai selon la revendication 6, caractérisé en ce que la lame élastique (62) est pourvue de chanfreins d'engagement (65) à des coins diagonalement opposés.

# FIG.1

FIG.2

FIG.3

FIG.4

FIG.6

FIG.5

FIG.8

FIG.7

# FIG.9

# FIG.10

0 096 158